# FASCICULE DE BREVET EUROPEEN

(11) **EP 0 634 516 B1**
(45) Date de publication et mention de la délivrance du brevet: **08.09.1999**
(21) Numéro de dépôt: 94420173.0
(22) Date de dépôt: 14.06.1994
(51) Int. Cl.: D06N 7/00, B05C 19/04

(54) **Procédé pour la réalisation de revêtements, pour sol notamment, à partir de matière plastique, et installation pour sa mise en oeuvre**
Verfahren und Vorrichtung zum Herstellen von Kunststoffbeschichtungen, insbesondere für Bodenbeläge
Method for and apparatus producing coatings from plastic in particular for floor coverings

(30) Priorité: 13.07.1993 FR 9308847
(43) Date de publication de la demande: 18.01.1995
(73) Titulaire: TARAFLEX, F-69170 Tarare (FR)
(72) Inventeur: Bottet, Richard, F-69210 Lentilly (FR); Fezzoli, Jean-Pierre, F-69490 Saint Forgeux (FR)
(74) Mandataire: Vuillermoz, Bruno

(56) Documents cités:
- DE-A- 123 365
- DE-A- 138 390
- DE-A- 139 622
- DE-A- 141 133
- DE-C- 123 365
- DE-C- 138 390
- DE-C- 139 622
- DE-C- 141 133
- FR-A- 2 336 187
- GB-A- 418 156
- GB-A- 693 619
- GB-A- 2 094 184

## Description

Pour la réalisation de revêtements sous forme de feuilles, plaques, pour sol notamment, il a été proposé depuis fort longtemps d'utiliser des matières plastiques.

Parmi les différentes techniques mises en oeuvre pour réaliser de tels revêtements, et plus particulièrement des revêtements de sol, il a été proposé d'enduire un support continu (complexe constitué par une grille en fils de verre + un non tissé), puis, à déposer, en continu à la surface dudit support ainsi enduit, des granulés, PVC par exemple, l'ensemble étant calandré et passant dans un tunnel de traitement proprement dit (chauffage infra-rouge + calandrage), suivi d'un refroidissement pour être ensuite grainé et recevoir un traitement final de surface. Ce procédé, qui présente l'avantage de permettre une production à la continue, à grande vitesse, et conduit à des revêtements de sol ayant de très bonnes caractéristiques (résistance à l'usure, au poinçonnement), présente cependant une limite en ce qu'il conduit à des produits d'aspect uniforme qui, au mieux, peuvent présenter comme décors un effet de "granité" si l'on utilise des particules ayant des coloris différents. En revanche, avec une telle technique, il n'est pas possible d'obtenir des décors, de contours déterminés, bien que cela ait été envisagé depuis près d'un siècle comme cela ressort du DE-C-138390, ayant des coloris différents, sauf à réaliser une véritable impression en surface sur le revêtement de sol préalablement réalisé comme cela ressort notamment du du FR-A-2 336 187.

Diverses propositions ont été faites par le passé pour réaliser directement des motifs colorés lors de la production en continu de feuilles à base de matière plastique. Ainsi, les brevets US-A-4 076 567 et FR-A-2 542 260, permettent de réaliser des feuilles de matière plastique décorées en projetant une poudre sur un support au travers d'un cadre sérigraphique soit plat (US-A-4 076 567), soit rotatif (FR-A-2 542 260). La dépose de poudre étant réalisée sans contact entre le support et le cadre sérigraphique, il est ainsi possible d'obtenir des motifs colorés. Ces techniques permettent donc d'obtenir des structures présentant des dessins formés dans la masse de la feuille produite, mais présentent cependant un certain nombre d'inconvénients.

La solution décrite dans le brevet US 4 076 567, permet d'utiliser des particules de matière plastique (PVC par exemple) pouvant être grossières (dimensions pouvant être de deux micromètres à environ quatre millimètres) (cf. colonne 6 lignes 50 à 55), mais le système de distribution utilisant un cadre plat, fixe, similaire à celui utilisé pour l'impression d'étoffes, si ce n'est que ce cadre n'est pas en contact avec le support, a comme inconvénient d'impliquer une avance par intermittence et surtout peut conduire à une déformation des motifs réalisés lors de l'avance du support si le cadre n'est pas soulevé, ce qui alors complique encore la mise en oeuvre du procédé.

La solution décrite dans le brevet français FR-A-2 542 260, est séduisante par le fait que l'utilisation d'un cadre sérigraphique rotatif permet une dépose à grande vitesse et augmente la capacité de production, du fait qu'alors, il est possible de travailler sans temps mort avec un déplacement continu, à vitesse constante du support à décorer.

D'une manière générale, selon cette technique, la dépose est réalisée sans contact entre le support et le cadre sérigraphique (comme dans le brevet US précité), l'alimentation du cadre étant réalisée par l'intermédiaire d'une trémie située à l'intérieur de ce dernier, trémie qui comporte deux racles en contact avec le cylindre. On peut dire qu'elle correspond elle aussi également à la technique d'impression au cadre rotatif utilisée pour la décoration d'étoffes textiles. Par rapport à la décoration d'étoffes textiles, les adaptations apportées consistent à utiliser non pas des colorants, mais à déposer sur le support, par gravité, des poudres contenues à l'intérieur d'une trémie, qui sont véhiculées à l'intérieur de celle-ci par un dispositif de vis tournante.

La quantité de poudre déposée est réglable en fonction de la grosseur des mailles du cadre sérigraphique et de l'ouverture des lèvres de la trémie intérieure (distance séparant les deux lèvres).

Une telle technologie est cependant limitée aux applications de poudre de faible granulométrie, typiquement mélange à sec de PVC de composition :
- résines (PVC émulsion, PVC suspension),
- plastifiants,
- stabilisants,
- pigments,
- oxydes de titane,
- noir de fumée.. .

Par ailleurs, dans tous les exemples donnés dans ce document, on ne peut obtenir que des articles de faible poids de l'ordre de 500 g/m2 + 30 g/m2.

Compte tenu de l'intérêt que présente une telle technologie de dépose au travers d'un cadre rotatif, il aurait pu être envisagé de l'adapter pour réaliser des produits "incrustés" constitués d'au moins deux composantes de granulés de couleur différente, permettant d'obtenir des complexes, utilisables comme revêtements de sol, et qui ont une épaisseur au minimum de un millimètre, doivent être produits en grande largeur (supérieure à deux mètres) et avoir un poids élevé (de l'ordre de 1250 g/m2 à 2500 g/m2.

Des essais faits sur une installation reproduisant les enseignements du brevet français FR-A-2 542 260 pour réaliser de tels produits, ont cependant démontré qu'une telle manière de procéder n'était pas transposable industriellement lorsque l'on souhaitait déposer des particules de matière plastique pouvant avoir des dimensions relatives importantes, supérieures à un millimètre, et ce comme dans le brevet US-A-4 076 567.

En effet, il a été constaté qu'en mettant en oeuvre une telle technologie, il n'était pas possible de réaliser un revêtement synthétique, de sol ou mural, de bonne qualité par suite :
- d'une mauvaise régularité longitudinale de la dépose des granulés résultant du "faux-rond" que présente un tel cadre rotatif ;
- d'une mauvaise régularité transversale de la dépose de ces granulés, par suite de la déformation de la génératrice dudit cadre rotatif ;
- d'une pollution des motifs obtenus par des granulés d'une autre couleur, compte tenu qu'il se produit un déplacement relatif entre le cadre et le support sur lequel sont disposés les granulés ;
- d'une surépaisseur parasite à l'arrière de chaque motif due à la chute des granulés situés sur une zone non perforée et ;
- d'une limitation dans la dimension et les formes des motifs réalisables par suite d'un écoulement parasite transitoire.

De plus, une telle technologie ne permet pas la dépose de produits abrasifs, fréquemment utilisés dans les revêtements de sol, pour obtenir des produits anti-dérapant ou des effets usuels. En effet, de par le fait que le système de régulation est constitué d'une trémie dont les lèvres sont en contact avec le cadre, l'utilisation de produits abrasifs entraînerait une usure importante et, par conséquent, une détérioration très rapide de l'ensemble.

Or on a trouvé, et c'est ce qui fait l'objet de la présente invention, une solution qui permet de résoudre ces problèmes, et autorise, d'une part, la réalisation de produits à très grande vitesse de production de manière similaire à la technique au cadre rotatif et, d'autre part, l'utilisation de particules de grosses dimensions, comme dans la technique de dépose au cadre plat (US-A-4 076 567).

Le procédé et l'installation pour la réalisation de complexes utilisables comme revêtements de sol conforme à l'invention comportent les caractéristiques telles que définies dans les revendications indépendantes 1 et 4 respectivement, avec tout mode préféré de réalisation tel que défini dans les revendications dépendantes.

Selon une forme de réalisation conforme à l'invention, la bande déformable a une structure similaire aux feuilles sérigraphiques utilisées pour un cadre rotatif, cette bande étant positionnée sur trois rouleaux de maintien, dont deux définissent un plan parallèle à la surface à revêtir, et le troisième, disposé dans le plan médian des deux rouleaux précités, assurant la tension de ladite bande par une translation verticale.

Dans une forme de mise en oeuvre préférentielle, selon l'invention, les lèvres de la goulotte sont en contact avec le tamis ou écran en forme de bande, ce contact étant situé à un niveau inférieur au plan défini par les génératrices inférieures des rouleaux de guidage et maintien de la bande.

L'invention et les avantages qu'elle apporte seront cependant mieux comprise grâce à l'exemple de réalisation donné ci-après d'une installation permettant sa mise en oeuvre, et qui est illustré par les figures annexées dans lesquelles :
- les figures 1 et 2 sont respectivement des vues en élévation et de côté d'un ensemble permettant la distribution selon un type déterminé de granulés de matière plastique sur un support conformément à l'invention, en vue de réaliser un revêtement de sol ;
- la figure 3 est une vue schématique, vue de côté, illustrant la manière dont est assurée la régularité de dépose des granulés sur une machine réalisée conformément à l'invention ;
- la figure 4 est une vue de détail, schématique, montrant la manière dont est réalisée la dépose des granulés sur le support.

Une installation permettant la mise en oeuvre du procédé conforme à l'invention, se présente sous la forme d'un ensemble comprenant essentiellement des moyens permettant de déposer, sur un support enduit (complexe constitué par une grille en fil de verre plus un non tissé par exemple), des granulés de matière plastique qui sont ensuite comprimés et traités thermiquement afin de réaliser une feuille homogène qui est ensuite réceptionnée sous la forme d'enroulement de grande longueur.

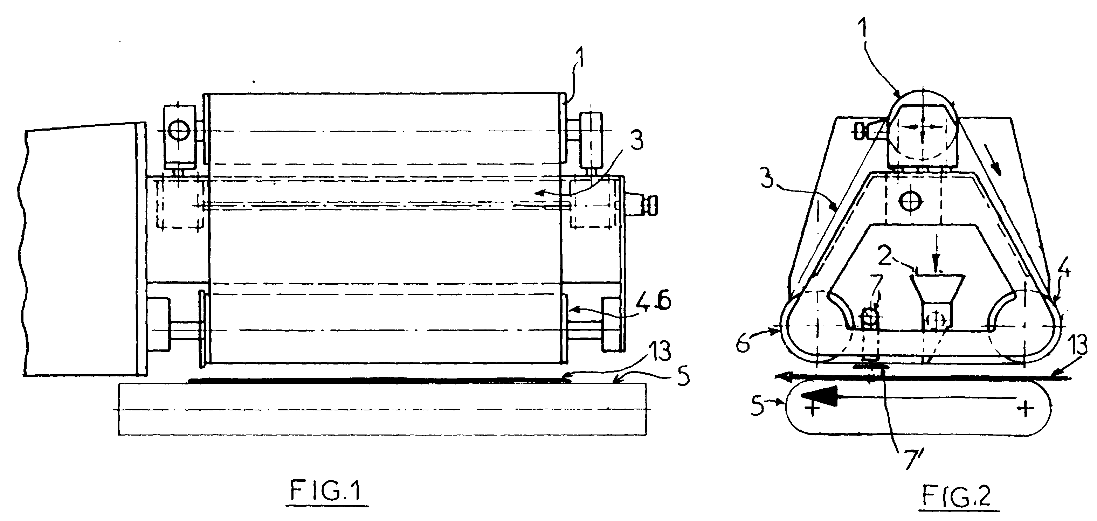

Conformément à l'invention, les moyens permettant de déposer les granulés sont constitués par une succession d'organes de distribution de granulés qui, conformément à l'invention, sont réalisés comme illustré aux figures 1 et 2. Chaque ensemble de distribution comporte comme élément essentiel une bande déformable (3) de même nature qu'un cylindre creux utilisé pour réaliser un cadre rotatif.

Cette bande est positionnée sur trois rouleaux repérés (1), (4) et (6). La tension de la bande déformable est assurée par translation verticale du rouleau (1). L'entraînement de la bande est assuré par le rouleau (6) qui est équipé d'une motorisation. Le biaisage du rouleau (1) permet d'ajuster le guidage de la bande durant son déplacement.

La machine d'impression est équipée d'une trémie intérieure vibrante (2) comportant une goulotte ayant deux lèvres rigides (12) en contact avec la bande déformable (3). La vibration de la trémie est une vibration unidirectionnelle déplacement horizontal et parallèle à la génératrice de contact lèvres/goulotte.

Un dispositif d'alimentation (non représenté sur le document annexe), permet de remplir la trémie de façon uniforme sur toute sa largeur et de maintenir un niveau constant à l'intérieur de celle-ci.

La machine d'impression est équipée d'un dispositif d'aspiration (7) situé entre la trémie (2) et le rouleau motorisé (6). Ce dispositif permet de récupérer les granulés restant à l'intérieur et à l'extérieur de la bande déformable (3). Son rôle est donc de nettoyer la bande. Le cadre (7') permet d'utiliser une aspiration importante sans pour autant perturber le matelas de granulés préalablement déposé.

La dépose de granulés s'effectue par gravité et vibration.

Le support (13), sur lequel les granulés sont déposés, n'est pas en contact avec la bande déformable (3). Il est supporté par le tapis (5).

Les vitesses de défilement du support, du tapis (5) et de la bande déformable (3) sont identiques.

Tous les avantages d'une telle manière de procéder que l'on pourrait qualifier d'impression "à la bande mobile", proviennent du fait que sa surface de travail est plane.

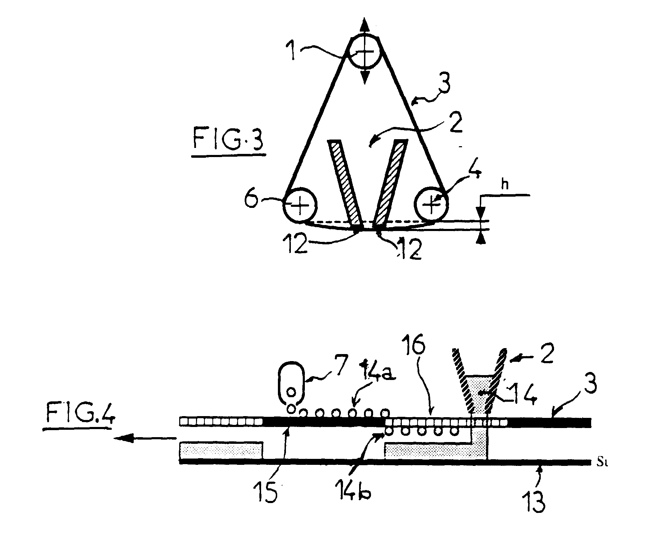

L'étanchéité entre les lèvres (12) de la trémie et la bande déformable (3) est assurée par la tension de cette dernière. En effet, le contact entre les lèvres et la bande étant situé à un niveau inférieur au plan défini par les génératrices inférieures des rouleaux (4) et (6), la tension de la bande crée un effort de pression réparti uniformément sur la génératrice de contact lèvres/bande. C'est la position des lèvres de la trémie qui assure un positionnement fixe de la génératrice de contact lèvres/bande (voir figure 3).

Grâce à une telle manière de procéder, on obtient les avantages suivants :

### Régularité longitudinale de la dépose.

En effet, la tension de la bande (3), qui a une certaine élasticité et qui ne comporte pas de partie rigide, permet d'assurer un entrefer constant et minimum entre les lèvres (12) de la trémie et la bande (3).

De plus, la génératrice de contact lèvres (12)/bande (3) est fixe car sa position est déterminée par celle des lèvres de la trémie qui sont quant à elles rigides.

On évite ainsi le phénomène cyclique induit par le faux-rond présent sur un cadre sérigraphique rotatif.

La régularité longitudinale de la dépose est donc fortement améliorée.

**Régularité transversale de la dépose,** étant donné que l'effort de pression des lèvres rigides (11) de la trémie, exercé sur la bande déformable (3), ne déforme pas la génératrice de contact lèvres/bande. En effet, cette dernière n'est pas encastrée à ses extrémités donc, sous l'effort de pression des lèvres, elle se déplace verticalement mais reste parfaitement rectiligne.

De plus, la conception du dispositif de fixation de la trémie ne nécessite pas une grande précision quant au positionnement des lèvres de la trémie par rapport à la bande. En effet, le contact lèvres/bande peut s'effectuer sur tout un plan. Ceci n'est pas le cas lorsque l'on utilise un cadre rotatif qui nécessite un positionnement suivant une ligne (la génératrice inférieure du cylindre gravé).

La régularité transversale de la dépose est donc fortement améliorée. En effet, l'entrefer lèvres/bande reste constant sur toute la largeur de saupoudrage et ce, quelque soit :
- l'effort de pression exercé entre les lèvres de la trémie et la bande déformable ;
- le positionnement des lèvres de la trémie par rapport à la bande.

### Aucune pollution dans le dessin formé.

Cette absence de pollution s'explique de la manière suivante en se reportant à la figure 4 annexée.

Entre l'instant où les granulés (14) polluent le cadre (sous la trémie intérieure) et l'instant où ils sont récupérés par le dispositif d'aspiration (7), la portion de la bande (3), sur laquelle ils sont fixés, est restée horizontale et elle s'est déplacée parallèlement au support (13) sur lequel les granulés sont déposés.

Par conséquent :
- les granulés (14a) (situés à l'intérieur de la bande), qui passent entre les lèvres de la trémie et les surfaces non perforées (15) de la bande (3), ne peuvent pas retomber sur le support (3) : ils sont tous récupérés par le dispositif d'aspiration (7) ;
- les granulés (14b) situés à l'extérieur de la bande (3), présents uniquement dans les zones perforées (16) de celle-ci, ne peuvent pas, en retombant, polluer les dessins réalisés : entre la trémie (2) et le dispositif d'aspiration (7), les zones non perforées (15) de la bande (3) restent positionnées à la verticale des zones vierges et protègent ainsi ces dernières de toute pollution.

L'utilisation pour réaliser les motifs d'une telle bande continue déplacée et maintenue parallèlement en regard du support à revêtir, permet donc d'éliminer totalement le risque de polluer un motif par des granulés de couleur différente. De plus, elle permet de supprimer les surépaisseurs parasites situées à l'arrière de chaque motif. Ces surépaisseurs sont dues, lors de l'utilisation d'un cadre rotatif, à la chute des granulés passant entre les lèvres de la trémie et les surfaces non perforées de la bande déformable.

Le déplacement parallèle de la bande et du support permet également d'espacer considérablement le dispositif d'aspiration et la trémie. Ceci permet donc de nettoyer la bande déformable sans perturber l'écoulement des granulés.

**Très bon écoulement des granulés**, obtenu grâce à l'utilisation d'une trémie vibrante (2) qui favorise un écoulement constant, minimise la durée de l'écoulement transitoire des granulés. Cette vibration, qui s'effectue suivant la génératrice de contact lèvres/bande, n'entraîne pas de phénomène de fatigue de la bande déformable. En effet, cette vibration n'induit, sur la bande, aucune contrainte interne supplémentaire.

L'utilisation d'une bande permet donc, grâce à la vibration de la trémie, d'obtenir des motifs de faibles dimensions tout en garnissant une bonne régularité d'épaisseur du produit obtenu.

Ainsi, la réalisation de motifs de dimensions et de formes très variées peut être envisagée. En effet, dans cette configuration, la masse de granulés déposée est totalement indépendante des dimensions des zones non perforées de la bande déformable.

Par rapport aux solutions antérieures, l'invention permet donc d'obtenir, avec une vitesse de production comparable à celle des techniques utilisant le cadre rotatif, une dépose importante (de 1000 à 3000 g/m2) de particules de granulométrie importante (de un à trois millimètres), et ce en visant des produits qui présentent les caractéristiques suivantes :
. très bonne régularité longitudinale de la dépose (pas de faux-rond),
. très bonne régularité transversale de la dépose (pas de déformation de la génératrice de contact lèvres/bande et pas de parallélisme rigoureux à respecter),
. pas de pollution des motifs réalisés (ils sont protégés de cette dernière durant tout leur séjour sous la tête d'impression),
. pas de surépaisseur parasite sur l'arrière des motifs (tous les granulés passant entre les lèvres de la trémie et les zones non perforées de la bande sont récupérés par le dispositif d'aspiration),
. pas de limitation, autre que la taille des particules, des formes et des dimensions des motifs (possibilité de créer un écoulement de particules permanent, ne comportant aucun régime transitoire),
. possibilité de déposer des particules abrasives sans être limité par des phénomènes d'usure.

## Revendications

1. Procédé pour la réalisation de complexes utilisables comme revêtements de sol qui consiste à déposer successivement sur un support enduit des granulés de matière plastique, et ce selon un motif déterminé, à comprimer et à traiter thermiquement le complexe ainsi réalisé pour provoquer la réalisation d'une feuille homogène, qui est ensuite réceptionnée par exemple sous la forme d'un enroulement de grande longueur, et dans lequel :
- chaque couleur de granulés est distribuée sur le support selon un motif déterminé au moyen d'un ensemble comprenant un tamis ou écran constitué par une bande (3) continue, souple et déformable et comportant un motif déterminé pour chaque couleur de granulé, , maintenue sous tension par l'intermédiaire d'éléments de guidage (1,4,6) disposés à l'arrière de ladite bande et positionnés les uns par rapport aux autres, de telle sorte qu'elle présente une section en forme de polygone dont l'un des côtés est maintenu parallèlement et espacé du support (13) à recouvrir de granulés, et est déplacé à la même vitesse et dans le même sens que ledit support ;
- l'alimentation en granulés au travers de la bande (3) est réalisée par l'intermédiaire d'une trémie vibrante (2) comportant une goulotte ayant deux lèvres rigides (12) en contact avec la surface de ladite bande (3) formant le tamis ou écran, la tension de la bande (3) créant un effort de pression réparti uniformément sur la génératrice de contact lèvres/bande ;
- les granulés excédentaires (14a) passant entre les lèvres de la trémie et les zones non perforées de la bande sont récupérées par aspiration.

2. Procédé selon la revendication 1, ***caractérisé*** en ce que la bande déformable (3) a une structure similaire aux feuilles sérigraphiques utilisées pour un cadre rotatif, cette bande étant positionnée sur trois rouleaux de maintien (1,4,6) dont deux (4,6) définissent un plan parallèle et espacé de la surface à revêtir, et le troisième (1), disposé dans le plan médian des deux rouleaux (4,6) précités, assurant la tension de ladite bande par une translation verticale.

3. Procédé selon l'une des revendications 1 et 2, ***caractérisé*** en ce que le contact entre les lèvres rigides (12) de la trémie vibrante (2) avec la surface de la bande (3) formant tamis ou écran, est situé à un niveau inférieur au plan défini par les génératrices inférieures des rouleaux

4. Installation pour la réalisation de complexes utilisables comme revêtements de sol, se présentant sous la forme d'un ensemble comprenant essentiellement des moyens permettant de déposer sur un support enduit des granulés de matière plastique qui sont ensuite comprimés et traités thermiquement, afin de réaliser une feuille homogène qui est ensuite réceptionnée sous la forme d'un enroulement de grande longueur, lesdits moyens permettant de déposer les granulés sont constitués par une succession d'ensembles permettant de distribuer différentes couleurs de granulés sur le support selon un motif déterminé, chaque ensemble comprenant:
- un tamis ou écran constitué par une bande (3) continue, souple et déformable, comportant un motif déterminé pour chaque couleur de granulés, maintenu sous tension par l'intermédiaire d'éléments de guidage (1,4,6) disposés à l'arrière de ladite bande et positionnés les uns par rapport aux autres, de telle sorte qu'il présente une section en forme de polygone dont l'un des côtés est maintenu parallèlement et espacé du support (13) à recouvrir de granulés, et est déplacé à la même vitesse et dans le même sens que ledit support ;
- l'alimentation en granulés au travers de la bande (3) est réalisée par l'intermédiaire d'une trémie vibrante (2) comportant une goulotte ayant deux lèvres rigides (12) en contact avec la surface de ladite bande (3) formant le tamis ou écran, la tension de la bande créant un effort de pression réparti uniformément sur la génératrice de contact lèvres/bande ;
- un dispositif d'aspiration (7) permettant de récupérer les granulés excédentaires (14a) qui passent entre les lèvres de la trémie et les zones non perforées de la bande (3).

5. Installation selon la revendication 4, ***caractérisée*** en ce que la bande déformable (3) a une structure similaire aux feuilles sérigraphiques utilisées pour un cadre rotatif, cette bande étant positionnée sur trois rouleaux de maintien (1,4,6), dont deux (4,6) définissent un plan parallèle et espacé de la surface à revêtir, et le troisième (1), disposé dans le plan médian des deux rouleaux (4,6) précités, assurant la tension de ladite bande par une translation verticale.

6. Installation selon la revendication 5, ***caractérisée*** en ce que le contact entre les lèvres (12) rigides de la goulotte avec la surface de la bande (3) formant tamis ou écran, est situé à un niveau inférieur au plan défini par les génératrices inférieures des rouleaux (4,6).

## Patentansprüche

1. Verfahren zur Herstellung von als Bodenbelag verwendbaren Komplexen, welches daraus besteht, nacheinander auf einen Schichtträger Granulatkörner aus Kunststoffmaterial abzulagern, und zwar entsprechend eines bestimmten Motivs, den so gebildeten Komplex zu komprimieren und thermisch zu behandeln, um die Erzeugung einer homogenen Bahn zu bewirken, welche anschließend zum Beispiel in Form einer Rolle mit großer Länge abgenommen wird, bei welchem:
- jede Granulatfarbe auf den Träger gemäß eines bestimmten Musters mittels einer Anordnung verteilt wird, welche ein Sieb oder eine Schablone, gebildet durch ein kontinuierliches, flexibles und verformbares Band (3), umfaßt, welches ein für jede Granulatfarbe bestimmtes Motiv aufweist und mittels Führungselementen (1,4,6) unter Spannung gehalten ist, welche hinter dem genannten Band angeordnet und zueinander derart positioniert sind, daß das Band einen Querschnitt in Form eines Polygons aufweist, von dem eine der Seiten parallel und im Abstand zu dem mit Granulat zu beschichtenden Träger (13) gehalten ist und daß es mit der gleichen Geschwindigkeit und in die gleiche Richtung wie der genannte Träger bewegt wird;
- die Zufuhr des Granulats durch das Band (3) mittels eines vibrierenden Fülltrichters (2) erfolgt, der eine Schütte mit zwei starren Lippen (12) aufweist, welche sich in Kontakt mit der Oberfläche des genannten, das Sieb oder die Schablone bildenden Bandes (3) befinden, wobei die Spannung des Bandes (3) eine gleichförmig verteilte Druckkraft auf der Kontaktlinie zwischen Lippen und Band erzeugt;
- das überschüssige Granulat (14a), welches zwischen den Lippen des Fülltrichters und den nicht perforierten Zonen des Bandes hindurchtritt, durch Absaugung rückgewonnen wird.

2. Verfahren nach Anspruch 1, **dadurch gekennzeichnet**, daß das verformbare Band (3) eine Struktur ähnlich den auf Rotationssiebdruckmaschinen verwendeten Siebdruckfolien aufweist, wobei das Band auf drei Halterollen (1,4,6) angeordnet ist, von denen zwei (4,6) eine Ebene definieren, die parallel und im Abstand zu der zu beschichtenden Oberfläche verläuft und eine dritte (1) in einer Mittelebene zwischen den beiden Rollen (4,6) angeordnet ist und die Spannung des genannten Bandes durch eine vertikale Verschiebung sicherstellt.

3. Verfahren nach einem der Ansprüche 1 und 2, **dadurch gekennzeichnet**, daß der Kontakt zwischen den starren Lippen (12) des vibrierenden Trichters (2) mit der Oberfläche des das Sieb oder die Schablone bildenden Bandes (3) in einem Bereich unterhalb der Ebene angeordnet ist, welche durch die unteren Mantellinien der Rollen definiert ist.

4. Anlage zur Herstellung von als Bodenbelag verwendbaren Komplexen, welche die Form einer Anordnung aufweist, welche im wesentlichen Mittel umfaßt, die es ermöglichen, auf einen Schichtträger Granulatkörner aus Kunststoffmaterial abzulagern, welche anschließend komprimiert und thermisch behandelt werden, um eine homogene Bahn zu erzeugen, die anschließend in Form einer Rolle großer Länge abgenommen wird, wobei die genannten Mittel zur Ermöglichung der Ablagerung des Granulats aus einer Folge von Einheiten bestehen, die es ermöglichen, Granulate verschiedener Farben auf dem Träger gemäß eines bestimmten Motivs zu verteilen, wobei jede Anordnung folgendes umfaßt:
- ein Sieb oder eine Schablone bestehend aus einem kontinuierlichen, flexiblen und verformbaren Band (3), welches ein für jede Granulatfarbe bestimmtes Motiv aufweist und mittels Führungselementen (1,4,6) unter Spannung gehalten ist, welche hinter dem genannten Band angeordnet und zueinander derart positioniert sind, daß es einen Querschnitt in Form eines Polygons aufweist, von dem eine Seite parallel und im Abstand zu dem mit Granulat zu beschichtenden Träger (13) gehalten ist und mit der gleichen Geschwindigkeit und in der gleichen Richtung wie der genannte Träger bewegt wird;
- die Zufuhr des Granulats durch das Band (3) ist mittels eines vibrierenden Fülltrichters (2) realisiert, der eine Schütte mit zwei starren Lippen (12) aufweist, die sich im Kontakt mit der Oberfläche des genannten, das Sieb oder die Schablone bildenden Bandes (3) befinden, wobei die Spannung des Bandes eine gleichförmig auf der Kontaktlinie zwischen den Lippen und dem Band verteilte Druckkraft erzeugt;
- eine Absaugvorrichtung (7), welche die Rückgewinnung des überschüssigen Granulats (14a) ermöglicht, welches zwischen den Lippen des Fülltrichters und den nicht perforierten Zonen des Bandes (3) hindurchtritt.

5. Anlage nach Anspruch 4, **dadurch gekennzeichnet**, daß das verformbare Band (3) eine Struktur ähnlich der auf Rotationssiebdruckmaschinen verwendeten Siebdruckfolien aufweist, wobei dieses Band auf drei Halterollen (1,4,6) angeordnet ist, von denen zwei (4,6) eine parallel und im Abstand zu der zu beschichtenden Oberfläche verlaufende Ebene definieren und die dritte (1) in einer Mittelebene zwischen diesen vorgenannten Rollen (4,6) angeordnet ist und die Spannung des genannten Bandes durch vertikale Verschiebung sicherstellt.

6. Anlage nach Anspruch 5, **dadurch gekennzeichnet**, daß der Kontakt zwischen den starren Lippen (12) der Schütte und der Oberfläche des das Sieb oder die Schablone bildenden Bandes (3) in einem Bereich unterhalb der durch die unteren Mantellinien der Rollen (4,6) definierten Ebene angeordnet ist.

## Claims

1. Process for the production of complexes which can be used as floor coverings, which consists in successively depositing, on a coated substrate and in a defined pattern, granules of plastic, in compressing the complex thus produced and in heat-treating it so as to produce a homogeneous sheet which is then taken up, for example in the form of a long reel, and in which process:
- each colour of granules is distributed on the substrate in a defined pattern by means of an assembly comprising a sieve or screen consisting of a continuous belt (3), which is flexible and deformable and has a defined pattern for each colour of granule, kept under tension by means of guiding elements (1,4,6) placed to the rear of the said belt and positioned one with respect to another in such a way that it has a cross section in the form of a polygon, one of the sides of which is maintained parallel to and spaced away from the substrate (3) to be covered with granules, and is moved at the same speed and in the same direction as the said substrate;
- the granules are fed through the belt (3) by means of a vibrating hopper (2) comprising a chute having two rigid lips (12) in contact with the surface of the said belt (3) forming the sieve or screen, the tension in the belt (3) creating a compressive force distributed uniformly over the lips/belt contact generatrix;
- the excess granules (14a) passing between the lips of the hopper and the unperforated regions of the belt are recovered by suction.

2. Process according to Claim 1, ***characterized*** in that the deformable belt (3) has a similar structure to the screen-printing sheets used for a rotary frame, this belt being positioned on three holding rollers (1,4,6), two (4,6) of which define a plane parallel to and spaced away from the surface to be coated, and the third (1) of which, lying in the mid-plane of the two aforementioned rollers (4,6), tensions the said belt by a vertical displacement.

3. Process according to either of Claims 1 and 2, ***characterized*** in that the contact between the rigid lips (12) of the vibrating hopper (2) and the surface of the belt (3) forming a sieve or screen lies below the plane defined by the lower generatrices of the rollers.

4. Plant for the production of complexes which can be used as floor coverings, being in the form of an assembly comprising essentially means making it possible to deposit, on a coated substrate, granules of plastic which are then compressed and heat treated, so as to produce a homogeneous sheet which is then taken up in the form of a long reel, the said means making it possible to deposit the granules consisting of a succession of assemblies allowing various colours of granules to be distributed over the substrate in a defined pattern, each assembly comprising:
- a sieve or screen consisting of a continuous belt (3), which is flexible and deformable and has a defined pattern for each colour of granules, kept under tension by means of guiding elements (1,4,6) placed to the rear of the said belt and positioned one with the respect to another in such a way that it has a cross section in the form of a polygon, one of the sides of which is maintained parallel to and spaced away from the substrate (13) to be covered with granules, and is moved at the same speed and in the same direction as the said substrate;
- the granules are fed through the belt (3) by means of a vibrating hopper (2) comprising a chute having two rigid lips (12) in contact with the surface of the said belt (3) forming the sieve or screen, the tension in the belt creating a compressive force distributed uniformly over the lips/belt contact generatrix;
- a suction device (7) making it possible to recover the excess granules (14a) which pass between the lips of the hopper and the unperforated regions of the belt (3).

5. Plant according to Claim 4, ***characterized*** in that the deformable belt (3) has a similar structure to the screen-printing sheets used for a rotary frame, this belt being positioned on three holding rollers (1,4,6), two of which (4,6) define a plane parallel to and spaced away from the surface to be coated, and the third (1) of which, lying in the mid-plane of the two aforementioned rollers (4,6), tensions the said belt by a vertical displacement.

6. Plant according to Claim 5, ***characterized*** in that the contact between the rigid lips (12) of the chute and the surface of the belt (3) forming the sieve or screen lies below the plane defined by the lower generatrices of the rollers (4,6).
